(19)

Europäisches
Patentamt
European
Patent Office
Office européen
des brevets

(11) **EP 1 976 322 A1**

(12) **EUROPEAN PATENT APPLICATION**

(43) Date of publication:
**01.10.2008 Bulletin 2008/40**

(51) Int Cl.:
*H04Q 7/38* (2006.01)

(21) Application number: **07251308.8**

(22) Date of filing: **27.03.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(71) Applicant: **British Telecommunications
Public Limited Company
London
EC1A 7AJ (GB)**

(72) Inventor: **The designation of the inventor has not
yet been filed**

(74) Representative: **Lau, Chi-Fai et al
BT Group Legal
Intellectual Property Department
BT Centre (ppC5A)
81 Newgate Street
GB-London EC1A 7AJ (GB)**

(54) **An authentication method**

(57) A method of providing authentication of a mobile
device in a telecommunications network comprising the
steps of: providing a user defined first password to an
authentication server in the communications network;
generating a set of security parameters by an authentication server and provisioning the security parameters
to a mobile device, wherein the security parameters are
stored at the mobile device and wherein the security parameters comprises an encryption key; authenticating
the mobile device by challenging the integrity of the encryption key stored at the mobile device and verifying a
first response generated by the mobile device in response to the challenge, wherein verifying comprises
comparing by the network whether the first response
matches a second response, wherein the first response
is based on the encryption key stored at the mobile device
and a second password input by the user, and the second
response is generated by the network and is based on
the encryption key generated by the authentication server and the user defined first password.

Figure 4a

EP 1 976 322 A1

**Description**

**Field of the Invention**

The present invention relates to a method of authentication in a telecommunications network, in particular a method of authenticating a mobile device using a network provisioned security module and subsequent secure communications between the mobile device and the network.

**Background to the Invention**

Security in communication systems has always been important and mobile cellular communication systems have been no different. In early "first generation" analogue mobile phone systems, a third party could eavesdrop on the communications between a mobile terminal and the mobile network relatively easily over the radio interface. These problems were partly mitigated when "second generation" digital systems, such as GSM (Global System for Mobile communications), were adopted by mobile operators.

Security provisions, including authentication, under GSM are based upon a key sharing principle, where a secure smart card, a SIM (subscriber identity module), is used to store a secret key that is been preloaded onto the card when the card is made. The secret key is thus shared a priori between the mobile phone and the network operator before any communication is initiated. This shared secret key forms the basis for all subsequent key generation used for authentication and ciphering of communications to and from the mobile phone.

The SIM also holds other data as well as the shared secret key, commonly referred to as Ki, such as SIM applications, encryption algorithms, and user identifiers such as the IMSI (International mobile subscriber identity). SIM cards have been proven to be reasonably secure and tamper-proof and have been commonly used in both GSM and 3G mobile telecommunications networks for some time.

However, SIM cards suffer from a number of drawbacks. In particular, provisioning of SIM cards is a complex process brought about by having to manufacture the tamper resistant modules, initialising the cards with the requisite data (IMSI, Ki and operator secrets) and then distributing and handling of the physical cards to the subscriber.

Furthermore, most mobile devices these days also only have the capacity to use a single SIM card, and thus access to networks is limited to those allowed by the single SIM. The few devices that can handle multiple SIM cards are rare and are usually more complex and costly to manufacture as well as being more difficult to use.

**Summary of the Invention**

It is the aim of embodiments of the present invention to address one or more of the above-stated problems.

According to one aspect of the present invention, there is provided a method of providing authentication of a mobile device in a telecommunications network comprising the steps of:

i) providing a user defined first password to an authentication server in the communications network;

ii) generating a set of security parameters by an authentication server and provisioning the security parameters to a mobile device, wherein the security parameters are stored at the mobile device and wherein the security parameters comprises an encryption key;

iii) authenticating the mobile device by challenging the integrity of the encryption key stored at the mobile device and verifying a first response generated by the mobile device in response to the challenge, wherein verifying comprises comparing by the network whether the first response matches a second response, wherein the first response is based on the encryption key stored at the mobile device and a second password input by the user, and the second response is generated by the network and is based on the encryption key generated by the authentication server and the user defined first password.

Furthermore, if the first and second responses match, then the method may further comprise:

iv) generating by the mobile device a ciphering key based on the stored encryption key and the second password; and

v) encrypting data transmitted from the mobile device to the network using the ciphering key.

The security parameters are usually encrypted and stored on the mobile device using the user defined first password. The user defined first password may be associated with the mobile device. Preferably, the first password is input by a user of the mobile device in response to a request by the mobile device.

Preferably, the security parameters further comprises a unique identifier generated by the authentication server and associated with the mobile device.

The step of challenging the integrity of the encryption key may comprise:

sending a random number generated by authentication server to the mobile device;

applying by the mobile device a first ciphering function to the random number and the encryption key stored at the mobile device to generate a first output; and

applying by the mobile device a second ciphering function to the first output together with the second password to generate the first response.

The second ciphering function may be defined by the network and provided to the mobile device by the network with the security parameters. This may be as part of a security module provided to the mobile device.

In a second aspect of the present invention, there is provided a system for authenticating a mobile device comprising:

a mobile device adapted to provide a user defined first password to an authentication server in a telecommunications network;

the authentication server adapted to generate a set of security parameters comprising an encryption key and provision the security parameters to the mobile device, and wherein the mobile device is adapted to store the security parameters and wherein the security parameters;

wherein the network is adapted to authenticate the mobile device by challenging the integrity of the encryption key stored at the mobile device and verifying a first response generated by the mobile device in response to the challenge, wherein verifying comprises comparing by the network whether the first response matches a second response, wherein the first response is based on the encryption key stored at the mobile device and a second password input by the user, and the second response is generated by the network and is based on the encryption key generated by the authentication server and the user defined first password.

In a further aspect of the present invention, there is provided a security module for a mobile device, said security module provided over a telecommunications network and comprising:

means for storing security parameters comprising an encryption key generated by a authentication server;

means for generating a response following a challenge by the network to the integrity of the stored encryption key, wherein the response is based on the encryption key stored at the mobile device and a password input by the user;

means for generating by the mobile device a ciphering key based on the stored encryption key and the password, wherein the ciphering key is for ciphering communications by the mobile device.

The authentication method and security module described offers much of the functionality of a standard GSM SIM card, but is implemented without the need for a physical SIM card and can be distributed over a network in the form of a software-based security module. Thus, many of the drawbacks associated with hardware based SIM cards are overcome. However, security is maintained through the specific provisioning and authentication steps employed, as well by using a further layer of user-defined, password based encryption/authentication.

As suggested, the method is typically executed on the mobile device side using a security module provided by the network. If the security module is ever compromised e.g. password stolen or module hacked, the service provider can block access by preventing further authentication steps or changing the ciphering/session key used by the network. A new set of passwords and security parameters can then be provided to the user together with a new security module if needed.

Provisioning of the security module and associated security parameters can be done online with only an internet or other network connection. No complex hardware provisioning is required. As provisioning is straightforward, the process can be repeated intermittently to generate new parameters and improve security of the system.

Even if an attacker manages to steal a user's encryption key (Ki), without knowledge of the user's password, the attacker will not be able to use those credentials to gain access to the network or decrypt the session traffic.

Multiple security modules can be provided, and thus provide a user with access to different networks or service providers. Such a scenario is not readily available with current systems.

**Brief Description of the Drawings**

For a better understanding of the present invention reference will now be made by way of example only to the accompanying drawings, in which:

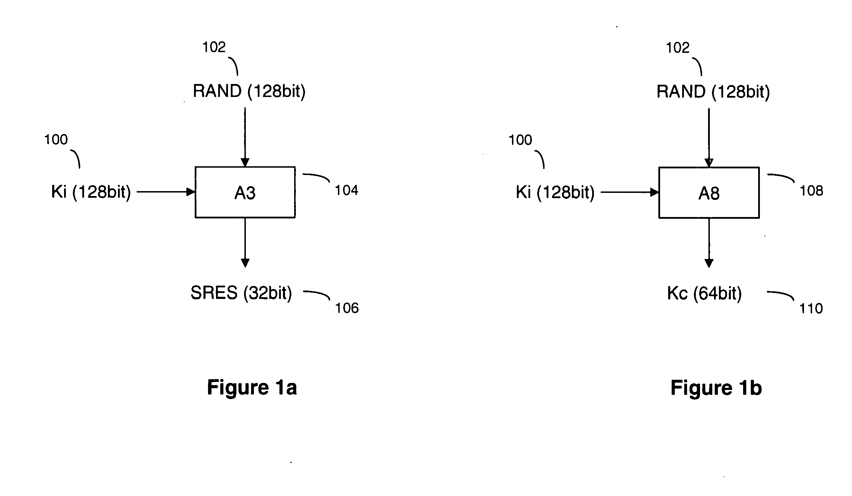

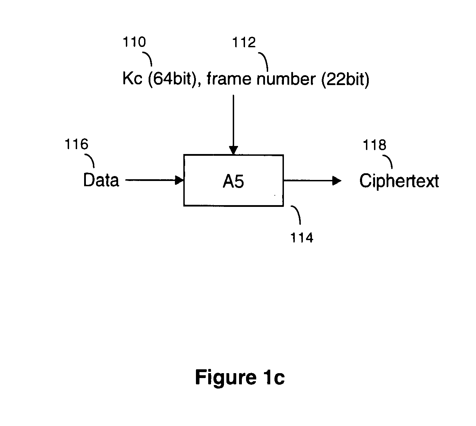

Figure 1 a is a diagram illustrating the operation of the GSM A3 algorithm;
Figure 1 b is a diagram illustrating the operation of the GSM A8 algorithm;
Figure 1 c is a diagram illustrating the operation of the GSM A5 algorithm;

Figure 2 is a network diagram illustrating elements involved in an embodiment of the present invention;

Figure 3 is a message flow diagram illustrating the provisioning of a security module in an embodiment of the present invention;

Figure 4 illustrates the methods used to during authentication and ciphering in an embodiment of the present invention;

Figure 5 is a network diagram illustrating elements in an authentication phase of an embodiment of the present invention;

Figure 6 is a message flow diagram illustrating the authentication phase of an embodiment of the present invention;

**Description of the Preferred Embodiments**

The present invention is described herein with reference to particular examples. The invention is not, however, limited to such examples.

Authentication in GSM is based on two entities, the SIM card in the mobile device and an Authentication Centre (AuC) in the core network of the service provider associated with the SIM card. The subscriber is provided with a secret key, Ki, one copy of which is preloaded and stored securely in the SIM card when the card is manufactured, and the other copy stored securely at the AuC. In order to authenticate the SIM, the AuC generates a random number, RAND, which is sent to the mobile device holding the SIM. Both the SIM and the AuC use the random number RAND in conjunction with the subscriber's secret key Ki, stored at the respective entities (SIM and AuC), and an authentication algorithm A3 to generate a signed response SRES. SRES generated by the SIM is sent back to the core network, which determines if it is the same as that generated by the AuC using the same method. This is the standard SIM authentication process, and a similar method is used to generate session keys for ciphering of communications traffic between the mobile device and the network.

The authentication process is illustrated in more detail in Figure 1a, which shows how the secret key Ki 100 is fed into the A3 algorithm 104 together with the random number RAND 102 provided by the AuC. The output from the A3 algorithm is the expected or signed response SRES 106. SRES 106 generated using the A3 algorithm as shown in Figure 1a is performed by both the SIM and the AuC. As shown in Figure 1 a, Ki 100 is typically 128 bits long, RAND 102 128 bits long and SRES 106 32 bits long.

The same random number RAND 102 generated by the AuC is used together with Ki 100 to determine the session key Kc 110, which is used for subsequent ciphering of communications data. An algorithm called A8 108 is used for generating the key Kc 110 and is performed by the SIM as well as by the AuC so that the mobile device and the core network are both respectively provided with the session key. This is illustrated in Figure 1 b.

In Figure 1 b, the secret key Ki 100 is fed into the A8 algorithm 108 together with the random number RAND 102 provided by the AuC. The output from the A8 algorithm is the session key Kc 110. The session key Kc 110 is typically 64 bits long.

The SIM card comes preloaded with Ki and the A3 and A8 algorithms when the card is manufactured. The determination of SRES and Kc as illustrated in Figures 1 a and 1 b are performed within the secure environment of the SIM card itself. Ki in particular never leaves the SIM card, nor does the SIM card allow direct interrogation of Ki, thus maintaining the security and integrity of the system.

The session key Kc 110 is used to encrypt and decrypt data transmitted over the mobile network. The encryption or ciphering of data to be transmitted over the network is better illustrated in Figure 1c. Figure 1c shows how a ciphering algorithm A5 114 takes the session key Kc 110 as an input together with the TDMA frame number 112 of the data frame to be ciphered and uses them to cipher the input data 116 into the output ciphertext 118. Note that the process of ciphering has been simplified slightly in Figure 1c. In practice, the A5 algorithm uses the TDMA frame number 112 and the session key Kc 110 to create a 114 bit keystream that is then XORed with 114 bit bursts of the input data to create the ciphertext 118.

The mobile device is preloaded with the A5 algorithm and the ciphering using the A5 algorithm is usually performed by the mobile device itself. A similar process, but in reverse, is used to decipher data sent to the mobile device from the network. Likewise, the same process is used by the network to cipher and decipher data sent to and from the mobile device.

Embodiments of the present invention are built on GSM algorithms and methods shown in Figure 1. In the following examples, a third party service provider wishes to authenticate a user of a mobile device before securely communicating with the device. A method of authentication and data encryption provided for over a network to a mobile device and implemented in software module is proposed. The software module, hereinafter referred to as a software-based security module or security module, and the implementation methods are secured by using an additional layer of security involving the use of a password provided by the user during a provisioning phase. The password is applied to the authentication and encryption algorithms using operator-specific cryptographic functions. The security module can thus be used to provide authentication and secure access to various networks or applications.

Embodiments of the invention cover a provisioning phase as well as an authentication and data encryption phase. The provisioned security module gives the associated device secure access to a given network, such as a WiFi (IEEE 802.x) network, as well as secure access to any service providers using that network. A person skilled in the art will appreciate that access to other types of network can also be secured using the following methods, as well as secure access to other services and entities.

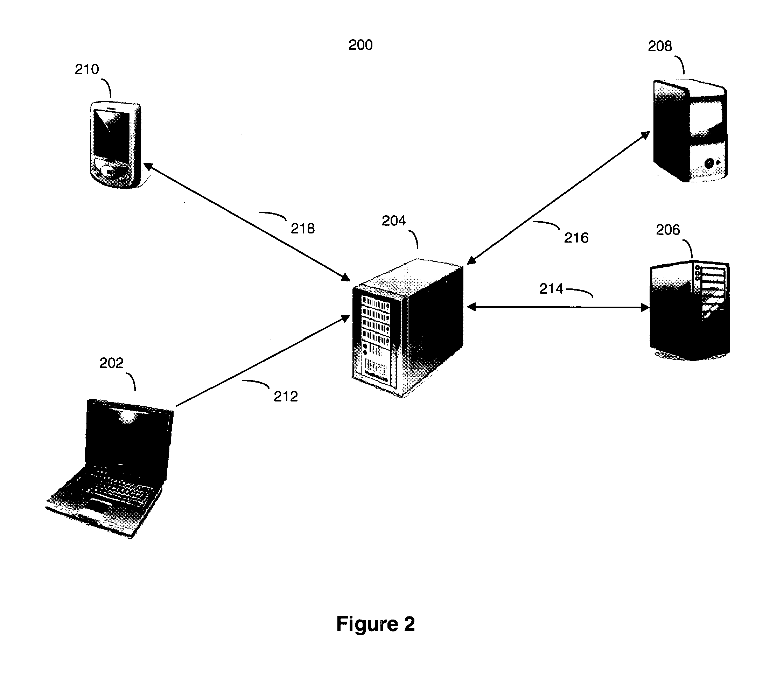

Figure 2 illustrates a network arrangement 200 in an embodiment of the present invention associated with provisioning a security module to a mobile device 210. The network 200 includes a laptop or similar device such as a computer 202 connected to a provisioning server 204 over connection 212. The connection 212 may be an internet connection provided over WiFi for example. A person skilled in the art will appreciate that other connection types are possible. The provisioning server 204 handles provisioning of the security module components to a user's device upon receiving a request from the computer 202. The provisioning server 204 is connected to an authentication server 206 over communications link 214 and also connected to data store 208 over communications link 216. The provisioning server 204 is also able to communicate and transfer data to the mobile device 210, which may be a mobile phone for example, over communications link 218. In the case of the mobile device being a GSM phone, then communications link 218 is a GSM cellular mobile connection.

Whilst the authentication server 206 and data store 208 have been shown as separate entities, in practice, they may be located within the same physical entity or at the least be connected to each other.

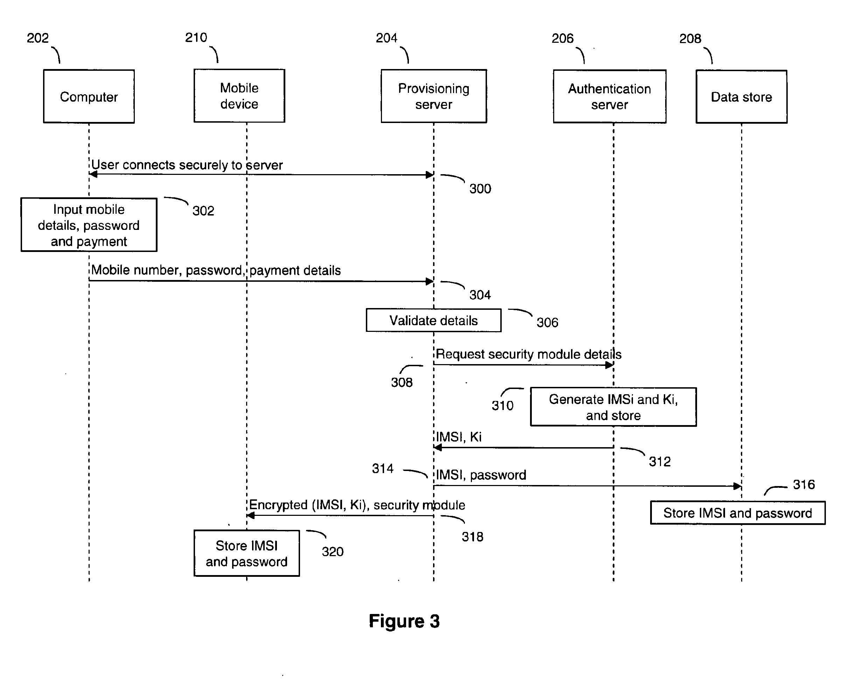

The operation of each of these elements in Figure 2 will now be described with reference to the message flow diagram of Figure 3, where like elements are referenced using like numerals.

In step 300, the user first connects to the provisioning server 204 using the computer 202. This connection may be over the internet and secured by using a HTTPS connection. The user is then presented with a web page or similar where the user can input details of the mobile device where the security module is required as shown in step 302. The details input by the user include the mobile phone number of the mobile device 210 and also payment details associated with the service. The user also provides a password which is used in the later authentication process and also for securing the security module components on the mobile device 210. In step 304, these details input by the user are sent securely over the HTTPS connection from the computer 202 to the provisioning server 204.

The provisioning server 204 then validates the details provided by the user in step 306. Any of the details provided can be validated. For example, the payment details might be checked and payment approved, the password strength verified (length, duplication etc), and the mobile number format checked.

In step 308, the provisioning server 204 makes a request to the authentication server 206 for security module parameters. The authentication server 206 receives the request and generates in response to the request a unique identifier for the mobile device 210 in step 310 as well as a secret key Ki. In this example, the identifier is referred to as the IMSI (international mobile subscriber identity). However, the identity is not restricted to having the limitations and format of a GSM IMSI. The term IMSI is used here to provide a simple reference to the unique identity, which is also associated with the subscriber or user.

The identifier and Ki are both stored securely at the authentication server 206. Further copies of these parameters are sent to the provisioning server in step 312. The unique identifier should be different to any identifier generated previously by the authentication server 206 previously.

In step 314, the provisioning server 204 stores the received identifier and the password provided by the user in the earlier registration step 304. The IMSI and password can be stored locally at the provisioning server 204 or, as shown in step 314, can be sent to the data store 208, where it can be securely stored there in step 316.

In step 318, the provisioning server 204 encrypts and sends a file containing the security parameters IMSI and Ki to the mobile device 210 specified by the mobile number given in step 304. The file is encrypted using the password provided by the user in step 304. Also sent with the encrypted file is the software-based security module. The security module is an application that is run by the mobile device 210 that executes the various methods used for authentication and ciphering which will be described in more detail below. The security module uses security parameters during its operation and also includes operator specific cryptographic functions such as F1 and F2 described below.

The security module and encrypted file are sent to the mobile device 210 using a SMS (short message service) message. Similarly, delivery methods such as WAP push can be utilised as well.

In an alternative arrangement, the security module and security parameters can be sent back to the computer 202 over the HTTPS connection, and the computer 202 can then forward the data to the mobile device 210 using a local connection such as a data cable or using Bluetooth.

In step 320, the user installs the security module on the mobile device 210 and also stores the security parameters securely, which can be done by keeping the parameters encrypted using the password specified by the user in the earlier registration step 304 or by using a new password specified by the user.

Whilst the above example has been described with reference to a computer 202 connecting to the provisioning server over a HTTPS connection over the internet, other variations on the manner of connection are envisaged. For example, the user could also connect to the provisioning server 204 using a mobile phone using a GPRS connection to connect to the internet. Indeed, the mobile device 210 could be used instead of the computer 202, which means that the mobile device is used to initiate the provisioning process as well as subsequently being in receipt of the security module later.

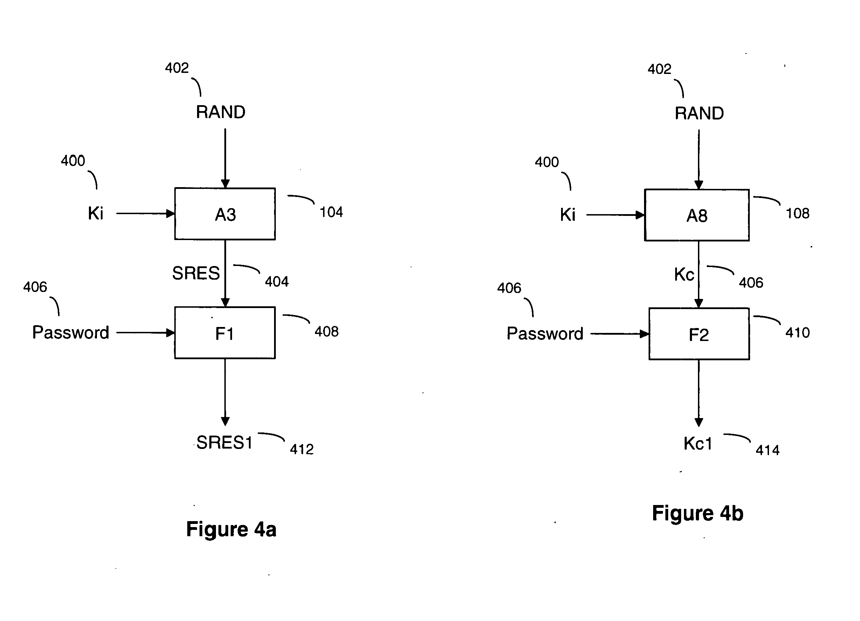

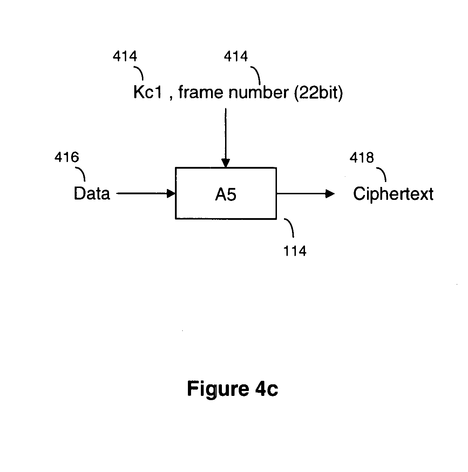

Figure 4 shows how the security parameters provided to the mobile device 210 are used together with the password provided by the user to authenticate the mobile device and encrypt data transmitted to and from a network or service provider. The methods for authentication as well as subsequent data encryption are based on the challenge response technique described in relation to GSM above and are provided for by the security module. These methods are shown in Figures 1 a, 1 b and 1c.

The method of authentication of the mobile using the security parameters received is shown in Figure 4a, and is executed by the security module on the mobile device 210. Figure 4b shows the method executed by the security module for generating the session key for ciphering data to be transmitted between the mobile device and the network. Figure 4c shows how the session key is used specifically for ciphering data.

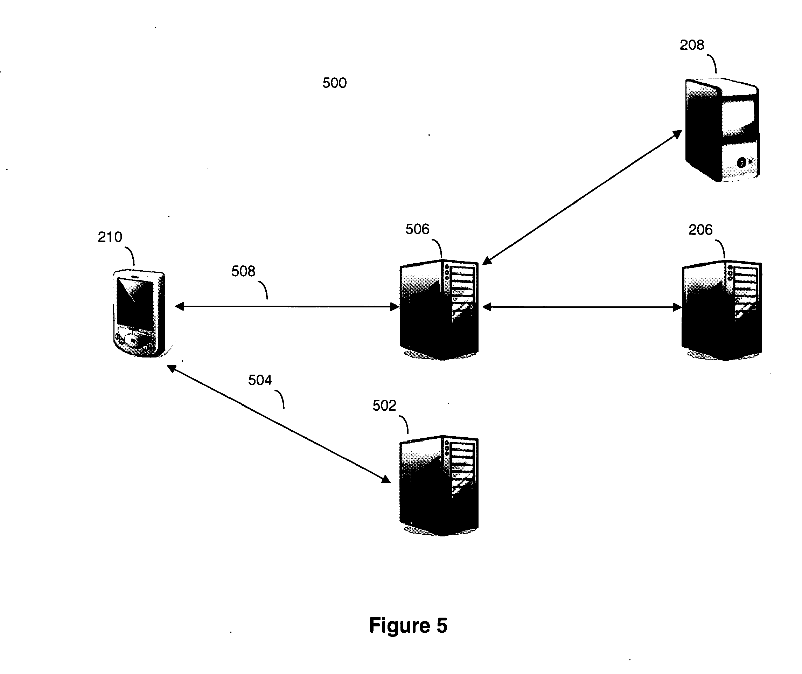

Figure 5 illustrates a network arrangement 500 comprising the mobile device 210, now loaded with the provisioned security module, as well as an application server 502. The application server 502 may provide various services to the mobile device, such as video downloads, online banking or provide VoIP services. However, access to the application server 502 and the network in which it resides is only possible once the mobile device 210 has been authenticated. The application server 502 and associated network is part of the network for which the security module is configured to be used in. Thus, the mobile device is able to authenticate and gain access to the network and application server 502 using the security module. The network may be a WiFi network for example or a cellular mobile network such as a GSM network.

The network 500 also includes an access server 506 and the authentication server 206 and data store 208 (as described earlier in Figure 2).

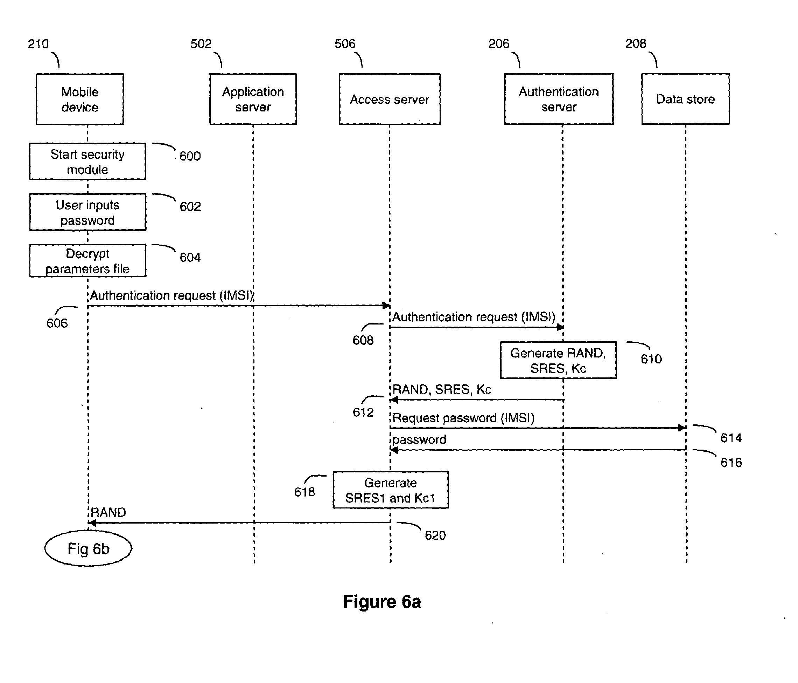

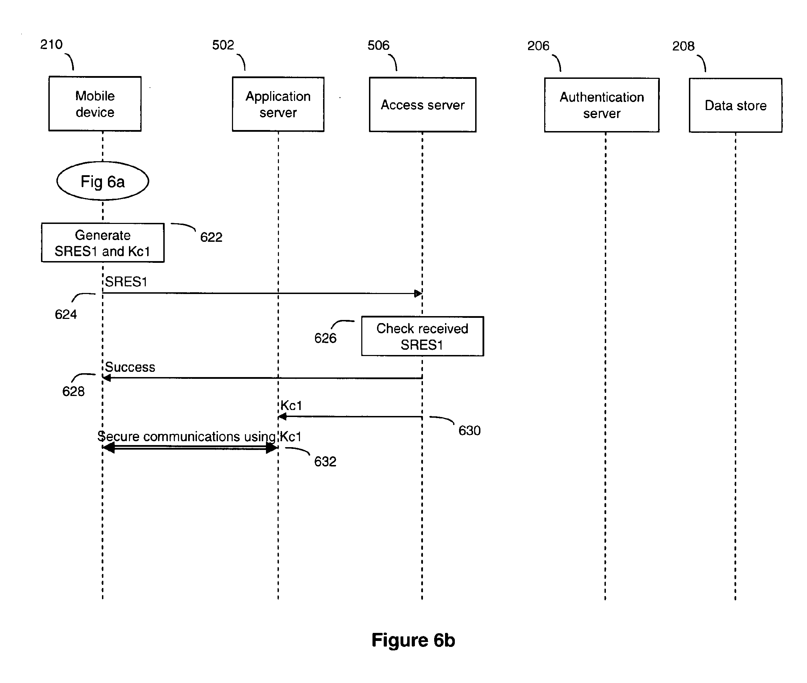

The operation of the security module in the mobile device 210 in relation to authentication and ciphering of data communications will now be described with reference to the flow diagram of Figure 6. References will also be made to Figures 4a, 4b and 4c where appropriate to describe the specific algorithms used in the authentication and ciphering process.

Firstly, in step 600, the user initiates the security module. This may be by way of a further application on the device such as a WPA supplicant that is used to provide improved security in a wireless network by using the IEEE 802.11 i standard. Furthermore, the security module may be triggered in response to a request by the network the mobile device 210 is attempting to connect to.

The security module then prompts the user to input the password that the user provided during the provisioning process. The user inputs the password in step 602. The security module then decrypts the encrypted file stored on the mobile device, which contains the unique identifier and Ki in step 604. The mobile device then forwards the unique identifier, which we refer to here as the IMSI, to the access server 506 in an authentication request message in step 606. The method by which the IMSI is forwarded depends on the network connections available to the mobile device. For example, the connection to the access server 506 may be via a GSM connection, and so communications will be via a base station (amongst other elements), whereas if the connection is a WiFi connection, then communications will involves at least an access point as well.

In step 608, the access server 506 forwards the authentication request, including the IMSI, to the authentication server 206. The authentication server 206 then uses the IMSI received in the authentication request to retrieve the previously generated (in step 310 in Figure 3) secret key Ki corresponding to the IMSI. The authentication server then generates a triplet comprising a random number RAND, an expected response SRES and a key Kc in step 612. Each of these parameters is generated in accordance with the methods shown in Figure 1. The values generated for RAND, SRES and Kc are then sent to the access server 506 in step 612.

In step 614, the access server 506 sends a request to the data store 208 for the password associated with the mobile device that was provided by the user in the earlier provisioning phase (see step 304 in Figure 3). The request includes the IMSI in order to identify the mobile device 210. The data store 208 uses the IMSI to look up the corresponding password that has been stored and returns that password in step 616.

The access server 506 then uses the received SRES from the authentication server 206 and the password from the data store 208 to generate an adapted expected response SRES1. This is done using cryptographic algorithm F1 taking SRES and the password as inputs and outputting SRES1. The specific method of generating SRES1 will now be described in more detail with reference to Figure 4a.

The network (the authentication server 206 in this example) first retrieves the key Ki corresponding to the IMSI provided, and also generates a random number RAND. Typically, both Ki and RAND are 128 bits long. As shown in Figure 4a, Ki 400 and RAND 402 are then fed into the A3 GSM algorithm 104. The output generated is SRES 404. This value of SRES 404 is the one transferred from the authentication server 206 to the access server 506 in step 612. The generation of SRES is performed by the authentication server 206 in step 610.

Once the access server 506 has received SRES 404, it calculates SRES1 412 as illustrated in the remainder of Figure 4a. Specifically, SRES 404 is fed into cryptographic algorithm F1 together with the password 406 received from the data store 208. The cryptographic function F1 is operator specific and can be defined by the operator for its specific use in contrast to the GSM algorithms like A3, A5 and A8, which are generally used across service providers and operators. The F1 function can also be tailored and thus be specific to the mobile device 210, as the function F1 is included as part of the security module provided to the mobile device 210 in step 318.

Similarly, the access server 506 also uses the received Kc 406 from the authentication server 206 and the password from the data store 208 and feeds both these parameters into cryptographic function F2 to derive Kc1 414. The generation of Kc1 414 is illustrated in Figure 4b. It should be noted that like F1, the cryptographic function F2 is also operator specific, but can also be further specified for the individual mobile device 210 in question.

Mathematically, the values of SRES1 412 and Kc1 414 can be represented using the following equations

$$SRES1 = F1 \ (SRES, PASSWORD) \qquad - (1)$$

$$Kc1 = F2 \ (Kc, PASSWORD) \qquad - (2)$$

In preferred embodiments of the invention, the lengths of SRES1 and Kc1 are 32 bits and 64 bits respectively to ensure compatibility with existing applications that utilise the GSM authentication standards without any modifications.

The functions F1 and F2, and the methods illustrated in Figure 4a and 4b, are also implemented in the security module provisioned to the mobile device 210.

In step 620, the access server 506 sends the RAND value to the mobile device 210. This value of RAND is taken by the security module application in the mobile device 210 and is sued by the security module to determine the expected response SRES1 and ciphering key Kc1 in accordance with the methods shown in Figure 4a and 4b in step 622.

Specifically, the methods used to calculate SRES1 and Kc1 used by the security module are the same as those used by the combination of the access server 506 and authentication server 206 described above in step 618 and shown in Figure 4a and 4b. The value of Ki used is the one stored on the mobile device and obtained from the decrypted file in step 604. This is combined with the received value of RAND using to A3 and A8 algorithms to generate SRES and Kc respectively. These are then fed into the F1 and F2 functions together with the password input in step 602 to get SRES1 and Kc1 respectively as shown in Figure 4a and 4b.

The mobile device 210 then sends of the value of SRES1 calculated by the security module to the access server 506 in step 624. The access server 506 then checks the value of SRES1 received from the mobile device 210 with the value of SRES1 calculated itself in step 618. If the two values match, then the mobile device is authenticated and the access server 506 sends the mobile device 210 a SUCCESS message in step 628.

The mobile device 210 then uses the value of Kc1 generated in step 622 to encrypt and decrypt data transferred to and from the mobile device. The method for ciphering is shown in Figure 4c and is the same as that described with reference to Figure 1c above, but using Kc1 instead of Kc. In step 630, the access server 506 provides the application server 502 with a copy of Kc1 generated by the access server 506 in step 618. Thus, by mobile device 210 and the application server 502 can communicate securely by ciphering all data using the now shared session key of Kc1 as shown in step 632.

Furthermore, the session key Kc1 generated by the access server 506 can be transferred to other entities in the network to enable secure communications between the other entity and the mobile device 210.

Should the session key Kc1 be compromised at any stage, the access server 506 or mobile device 210 can initiate authentication again and by using a new RAND, a new session key Kc1 can be generated. This is also particularly useful if different session keys are needed for different application servers or sessions to maintain the security of the network.

In the above example, the F1 and F2 functions are performed by the access server 506. However, these functions can also be implemented at the authentication server 206 depending on the set up of the network.

It should also be noted that communications between the access server 506 and the authentication server 206 and data store 208 are secured accordingly to protect the integrity of the data transferred between those parties, in particular the password sent by the data store 208.

In a further embodiment of the invention, the authentication server 206 can issue several challenges (RAND) and thus several expected responses (SRES) are also generated. This means that the security module can be interrogated several times and several SRES1 generated, which can add to the security provided, ensuring the integrity of the mobile device 210 and further validate its identity.

It is noted at this point that at no stage during the provisioning stage is the password provided by the user ever stored in a clear form on the mobile device 210 itself. Indeed, the password is only ever used to encrypt the security parameters stored on the mobile device and is not itself stored on the mobile device. Likewise, when user inputs the password into the mobile device 210 in the authentication phase, the password is only held for as long as needed to calculate SRES1 and Kc1. Thus, the password is never stored permanently on the mobile device and thus significantly reduces the likelihood that it will be compromised or obtained by a hacker.

In general, it is noted herein that while the above describes examples of the invention, there are several variations and modifications which may be made to the described examples without departing from the scope of the present invention as defined in the appended claims. One skilled in the art will recognise modifications to the described examples.

**Claims**

1. A method of providing authentication of a mobile device in a telecommunications network comprising the steps of:

   i) providing a user defined first password to an authentication server in the communications network;
   ii) generating a set of security parameters by an authentication server and provisioning the security parameters to a mobile device, wherein the security parameters are stored at the mobile device and wherein the security parameters comprises an encryption key;
   iii) authenticating the mobile device by challenging the integrity of the encryption key stored at the mobile device and verifying a first response generated by the mobile device in response to the challenge, wherein verifying comprises comparing by the network whether the first response matches a second response, wherein the first response is based on the encryption key stored at the mobile device and a second password input by the user, and the second response is generated by the network and is based on the encryption key generated by the authentication server and the user defined first password.

2. A method according to claim 1, wherein if the first and second responses match, the method further comprises:

   iv) generating by the mobile device a ciphering key based on the stored encryption key and the second password; and
   v) encrypting data transmitted from the mobile device to the network using the ciphering key.

3. A method according to claim 1 or claim 2, wherein the security parameters are encrypted and stored on the mobile device using the user defined first password.

4. A method according to any preceding claim, wherein the user defined first password is associated with the mobile device.

5. A method according to any preceding claim wherein the first password is input by a user of the mobile device in response to a request by the mobile device.

6. A method according to any preceding claim, wherein the security parameters further comprises a unique identifier generated by the authentication server and associated with the mobile device.

7. A method according to any preceding claim, wherein the step of challenging the integrity of the encryption key comprises:

   sending a random number generated by authentication server to the mobile device;
   applying by the mobile device a first ciphering function to the random number and the encryption key stored at the mobile device to generate a first output;
   applying by the mobile device a second ciphering function to the first output together with the second password to generate the first response.

8. A method according to claim 7, wherein the second ciphering function is defined by the network and provided to the mobile device by the network with the security parameters.

9. A system for authenticating a mobile device comprising:

a mobile device adapted to provide a user defined first password to an authentication server in a telecommunications network;

the authentication server adapted to generate a set of security parameters comprising an encryption key and provision the security parameters to the mobile device, and wherein the mobile device is adapted to store the security parameters and wherein the security parameters;

wherein the network is adapted to authenticate the mobile device by challenging the integrity of the encryption key stored at the mobile device and verifying a first response generated by the mobile device in response to the challenge, wherein verifying comprises comparing by the network whether the first response matches a second response, wherein the first response is based on the encryption key stored at the mobile device and a second password input by the user, and the second response is generated by the network and is based on the encryption key generated by the authentication server and the user defined first password.

10. A security module for a mobile device, said security module provided over a telecommunications network and comprising:

means for storing security parameters comprising an encryption key generated by a authentication server;
means for generating a response following a challenge by the network to the integrity of the stored encryption key, wherein the response is based on the encryption key stored at the mobile device and a password input by the user;
means for generating by the mobile device a ciphering key based on the stored encryption key and the password, wherein the ciphering key is for ciphering communications by the mobile device.

EP 1 976 322 A1

102

RAND (128bit)

100

Ki (128bit) → A3 → 104

SRES (32bit) 106

**Figure 1a**

102

RAND (128bit)

100

Ki (128bit) → A8 → 108

Kc (64bit) 110

**Figure 1b**

110 112
Kc (64bit), frame number (22bit)

116
Data → | A5 | → Ciphertext
         114        118

**Figure 1c**

**Figure 2**

Figure 3

EP 1 976 322 A1

402

RAND

400

Ki ⟶ A3 — 104

SRES — 404

406

Password ⟶ F1 — 408

SRES1 — 412

**Figure 4a**

402

RAND

400

Ki ⟶ A8 — 108

Kc — 406

406

Password ⟶ F2 — 410

Kc1 — 414

**Figure 4b**

Figure 4c

Figure 5

EP 1 976 322 A1

**Figure 6a**

210 — Mobile device
502 — Application server
506 — Access server
206 — Authentication server
208 — Data store

Start security module — 600
User inputs password — 602
Decrypt parameters file — 604
Authentication request (IMSI) — 606
Authentication request (IMSI) — 608
Generate RAND, SRES, Kc — 610
RAND, SRES, Kc — 612
Request password (IMSI) — 614
password — 616
Generate SRES1 and Kc1 — 618
RAND — 620
Fig 6b

Figure 6b

European Patent
Office

**EUROPEAN SEARCH REPORT**

Application Number

EP 07 25 1308

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 7 023 994 B1 (DUPRE MICHAEL [DE]) 4 April 2006 (2006-04-04) * column 1, line 22 - line 34 * * column 4, line 10 - line 67 * ----- | 1-10 | INV. H04Q7/38 |
| A | US 2003/003895 A1 (WALLENTIN PONTUS [SE] ET AL) 2 January 2003 (2003-01-02) * paragraphs [0045], [0046] * * paragraph [0076] * * figure 1a * ----- | 1-10 | |
| A | EP 1 643 714 A (HEWLETT PACKARD DEVELOPMENT CO [US]) 5 April 2006 (2006-04-05) * paragraph [0019] - paragraph [0022] * * figure 1 * ----- | 1-10 | |
| A | US 2006/120531 A1 (SEMPLE JAMES [GB] ET AL) 8 June 2006 (2006-06-08) * paragraph [0006] - paragraph [0011] * * figure 1 * ----- | 1-10 | TECHNICAL FIELDS SEARCHED (IPC) H04Q H04L |

The present search report has been drawn up for all claims

| Place of search | Date of completion of the search | Examiner |
|---|---|---|
| Munich | 6 September 2007 | Schorgg, Alfred |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 07 25 1308

This annex lists the patent family members relating to the patent documents cited in the above-mentioned European search report.
The members are as contained in the European Patent Office EDP file on
The European Patent Office is in no way liable for these particulars which are merely given for the purpose of information.

06-09-2007

| Patent document cited in search report | | Publication date | Patent family member(s) | | Publication date |
|---|---|---|---|---|---|
| US 7023994 | B1 | 04-04-2006 | AT | 215293 T | 15-04-2002 |
| | | | AU | 9252398 A | 01-03-1999 |
| | | | CZ | 20000425 A3 | 12-07-2000 |
| | | | WO | 9908466 A1 | 18-02-1999 |
| | | | DE | 19733662 C1 | 07-01-1999 |
| | | | EP | 1002440 A1 | 24-05-2000 |
| | | | ES | 2175774 T3 | 16-11-2002 |
| | | | HU | 0003175 A2 | 28-02-2001 |
| | | | PL | 338469 A1 | 06-11-2000 |
| US 2003003895 | A1 | 02-01-2003 | NONE | | |
| EP 1643714 | A | 05-04-2006 | JP | 2006109449 A | 20-04-2006 |
| | | | US | 2006072761 A1 | 06-04-2006 |
| US 2006120531 | A1 | 08-06-2006 | NONE | | |

EPO FORM P0459

For more details about this annex : see Official Journal of the European Patent Office, No. 12/82